# EUROPÄISCHE PATENTSCHRIFT

(11) **EP 3 173 008 B1**
(45) Veröffentlichungstag und Bekanntmachung des Hinweises auf die Patenterteilung: **10.01.2024**
(21) Anmeldenummer: 16199560.0
(22) Anmeldetag: 18.11.2016
(51) Int. Cl.: A47L 15/44

(54) **VORRATSBEHÄLTER FÜR EIN DOSIERGERÄT**
STORAGE CONTAINER FOR A METERING DEVICE
RÉCIPIENT RÉSERVOIR POUR APPAREIL DE DOSAGE

(30) Priorität: 25.11.2015 DE 102015120422
(43) Veröffentlichungstag der Anmeldung: 31.05.2017
(73) Patentinhaber: Miele & Cie. KG, 33332 Gütersloh (DE)
(72) Erfinder: Wegener, Dirk, 33649 Bielefeld (DE); Hils, Fabian, 33129 Delbrück (DE); Kröger, Günter, 32369 Rahden (DE); Ernst, Holger, 33613 Bielefeld (DE)

(56) Entgegenhaltungen:
- WO-A1-2013/113576
- WO-A2-2008/012613
- DE-A1-102013 104 391
- DE-U1-202004 006 632

## Beschreibung

Die Erfindung betrifft einen Vorratsbehälter zur Anordnung in einem Dosiergerät eines programmgesteuerten Reinigungsgerätes, insbesondere einer Geschirrspülmaschine, mit einem einen Volumenraum bereitstellenden Grundkörper, wobei der Volumenraum eine Größe aufweist, die der Bevorratung von pulverförmigem Reinigungsmittel in einer Menge dient, die für die Durchführung einer Mehrzahl von Spülprogrammen ausreichend ist.

Programmgesteuerte Reinigungsgeräte im Allgemeinen sowie Geschirrspülmaschinen im Speziellen sind aus dem Stand der Technik an sich gut bekannt, weshalb es eines gesonderten druckschriftlichen Nachweises an dieser Stelle nicht bedarf.

Reinigungsgeräte der in Rede stehenden Art verfügen typischerweise über einen Spülbehälter, der einen Behandlungsraum, auch Spülraum genannt, bereitstellt. Dieser Behandlungsraum ist verwenderseitig über eine Beladeöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich im Falle einer Geschirrspülmaschine beispielsweise um Geschirr, Besteckteile und/oder dgl. handeln kann.

Zur Beaufschlagung von zu reinigendem Spülgut mit Spülflüssigkeit, der sogenannten Spülflotte, verfügt das Reinigungsgerät im Inneren des Spülbehälters über eine Sprüheinrichtung. Diese Sprüheinrichtung stellt in aller Regel verdrehbar gelagerte Sprüharme zur Verfügung, wobei typischerweise zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Zur Erzielung eines optimierten Reinigungsergebnisses finden Prozesschemikalien Verwendung, die während eines Reinigungsvorgangs dem Spülraum zugeführt werden, typischerweise als Zugabe zur Spülflotte. Bei solchen Prozesschemikalien kann es sich beispielsweise um Reinigungsmittel handeln, die dem Spülraum des Reinigungsgerätes programmgesteuert zu einem bestimmten Zeitpunkt des Programmablaufs zugegeben werden.

Aus dem Stand der Technik sind Reinigungsmittel in flüssiger und fester Form bekannt. Dabei können feste Reinigungsmittel in schüttfähiger Pulverform oder als sogenannte Tabs, d.h. in Tablettenform vorliegen. Die Praxis hat indes gezeigt, dass sich mit schüttfähigem Reinigungsmittel in Pulverform die vergleichsweise besten Reinigungsergebnisse erzielen lassen.

Bei der Verwendung von schüttfähigem Reinigungsmittel in Pulverform ist vor jedem Start eines Reinigungsprogramms verwenderseitig von Hand eine Reinigungsmitteldosierung vorzunehmen. Ein Reinigungsgerät verfügt zu diesem Zweck typischerweise türinnenseitig über einen Vorratsbehälter, der mit einer manuell zu bestimmenden Menge an Reinigungsmittel zu bestücken ist. Während eines Programmablaufs öffnet sich dieser Vorratsbehälter zu einem bestimmten Zeitpunkt des Spülprogramms und das vom Vorratsbehälter bevorratete Reinigungsmittel kann von der im Spülraum des Reinigungsgerätes befindlichen Spülflotte ausgeschwemmt werden.

Um eine Reinigungsmittelbevorratung für eine Mehrzahl von Spülprogrammen vornehmen zu können, so dass nicht vor Beginn eines jeden Spülprogramms eine manuelle Reinigungsmitteldosierung stattzufinden hat, sind Dosiergeräte vorgeschlagen worden, so z.B. mit der DE 10 2013 104 391 A1.

Das vorbekannte Dosiergerät verfügt über einen auswechselbar angeordneten Vorratsbehälter, der der Bevorratung von Reinigungsmittel in einer Menge dient, die für eine Mehrzahl von Spülprogrammen ausreichend ist. Der Vorratsbehälter ist um eine Drehachse verdrehbar gelagert, wobei im bestimmungsgemäßen Dosierfall programmgesteuert eine Verdrehbewegung des Vorratsbehälters bewirkt wird. Zu diesem Zweck ist eine motorgetriebene Antriebseinrichtung vorgesehen, mittels welcher im Betriebsfall eine Verdrehbewegung des Vorratsbehälters vorgenommen wird. Die motorgetriebene Antriebseinrichtung wirkt dabei mit einer Trageinheit zusammen, die den Vorratsbehälter auswechselbar aufnimmt.

Zum Zwecke der Reinigungsmittelabgabe verfügt der Vorratsbehälter über eine Auslassöffnung. Über diese wird im Betriebsfall portionsweise Reinigungsmittel abgegeben. Dabei erfolgt eine solche Reinigungsmittelabgabe infolge einer Verdrehbewegung des Vorratsbehälters. Je 360°-Umdrehung des Vorratsbehälters wird eine stets gleiche Portionsmenge an Reinigungsmittel der Auslassöffnung zugeführt, und von dort aus unter Zwischenschaltung eines Kanalsystems in den Spülraum des Reinigungsgerätes abgegeben.

Der gemäß vorbekanntem Dosiergerät zum Einsatz kommende Vorratsbehälter verfügt über einen Grundkörper, der einen Volumenraum bereitstellt. Dieser Volumenraum dient der Beherbergung von pulverförmigem Reinigungsmittel, wobei der Volumenraum eine solche Größe bereitstellt, dass Reinigungsmittel in einer Menge bevorratet werden kann, die für die Durchführung einer Mehrzahl von Spülprogrammen ausreichend ist. Ein solcher, d.h. gattungsgemäßer Vorratsbehälter ist mit der vorgenannten DE 10 2013 104 391 A1 beschrieben.

Die WO 2013113576 A1 zeigt einen Vorratsbehälter zur Anordnung in einem Dosiergerät einer Geschirrspülmaschine, wobei der Vorratsbehälter eine Blisterverpackung mit einer Vielzahl einzelner, von einander getrennter Blister-Kompartements zur Bevorratung von granularem Reingungsmittel für jeweils ein Reinigungsprogramm umfasst.

Obgleich sich aus dem Stand der Technik vorbekannte Vorratsbehälter im alltäglichen Praxiseinsatz bewährt haben, besteht Verbesserungsbedarf, insbesondere mit Blick auf eine verbesserte Handhabung. Es ist deshalb die **Aufgabe** der Erfindung, einen Vorratsbehälter zur Anordnung in einem Dosiergerät eines programmgesteuerten Reinigungsgerätes vorzuschlagen, der konstruktionsbedingt eine verbesserte Handhabung gewährleistet.

Zur **Lösung** dieser Aufgabe wird mit der Erfindung ein Vorratsbehälter mit den Merkmalen von Anspruch 1 vorgeschlagen.

Der erfindungsgemäße Vorratsbehälter verfügt über einen Grundköper, der becherartig ausgebildet ist und über ein Bodenteil und eine damit einstückig ausgebildete, umlaufende Seitenwandung verfügt. Der Grundkörper ist insoweit einseitig offen ausgebildet und verfügt über eine dem Bodenteil gegenüberliegende Beschickungsöffnung. Diese Beschickungsöffnung ermöglicht ob ihrer Größe herstellerseitig eine zeitoptimierte Befüllung des vom Grundkörper bereitgestellten Volumenraums mit pulverförmigem Reinigungsmittel. Dies gestattet eine automatisierte und robotorgestützte Erstbefüllung mit kurzen Taktzeiten, was betriebswirtschaftlich von Vorteil ist.

Der Grundkörper ist bevorzugterweise als einstückig gespritztes Kunststoffteil ausgebildet. Dabei ist vorgesehen, dass die Seitenwandung dem Bodenteil gegenüberliegend mit einem Bund ausgerüstet ist. Dieser Bund erstreckt sich ausgehend von der Seitenwandung radial nach außen.

Die Ausgestaltung des Bunds ist aus mehreren Gründen von Vorteil. Zum einen wird eine Versteifung des Grundkörpers erreicht, was es gestattet, diesen vergleichsweise dünnwandig auszubilden. Dies spart Gewicht und hilft, die Herstellkosten zu minimieren. Der Bund eröffnet darüber hinaus die Möglichkeit, die Beschickungsöffnung mittels eines Deckels entweder durch Aufschweißen oder durch Formschluss zu verschließen, wobei der Vorratsbehälter im Falle des Verschweißens als Einwegbehälter und im Falle des formschlüssig aufzusetzenden Deckels als Mehrwegbehälter ausgebildet ist.

Der erfindungsgemäß vorgesehen Bund stellt eine oberseitig verlaufende Schweißfläche zur Verfügung. Es ist so gestattet, die vom Grundkörper bereitgestellte Beschickungsöffnung mittels einer als Deckel dienenden Folie zu verschließen, wobei die Folie fluiddicht mit dem Bund dank der davon bereitgestellten Schweißfläche verschweißt werden kann. Die Folie kann dabei zumindest abschnittsweise transparent oder semitransparent ausgebildet sein, so dass ein Sichtfenster zur Kenntlichmachung des Füllstandes gegeben ist.

Alternativ kann die Folie durch einen abnehmbaren Deckel ersetzt sein, welcher unter Ausbildung eines Formschlusses über den Bund zur Ausbildung eines Hintergriffes zu führen ist. Der Bund stellt für einen solchen Hintergriff einen Hinterschnitt bereit, der eine lagesichere, fluiddichte und positionsgenaue Fixierung eines aufgesetzten Deckels ermöglicht. Der Vorteil dieser Ausgestaltung liegt insbesondere darin, dass der Vorratsbehälter mehrfach eingesetzt werden kann. Für eine Neubefüllung des Vorratsbehälters kann der Deckel verwenderseitig entfernt werden. Alsdann kann eine Neubefüllung des Vorratsbehälters mit Reinigungsmittel stattfinden, wobei abschließend ein Verschluss des Vorratsbehälters durch erneutes Aufsetzen des Deckels stattfindet.

Die erfindungsgemäße Ausgestaltung erlaubt eine einfache Handhabung sowohl herstellerseitig als auch verwenderseitig. Ein und derselbe Grundkörper kann wahlweise mit einer mit dem Grundkörper zu verschweißenden Folie als Deckel oder mit einem wiederverwendbaren Deckel genutzt werden, der im bestimmungsgemäßen Verwendungsfall den vom Bund ausgebildeten Hinterschnitt hintergreift.

Es ist gemäß einem weiteren Merkmal der Erfindung vorgesehen, dass der Bund die vom Grundkörper bereitgestellte und mittels des Deckels verschließbare Beschickungsöffnung umschließt. Der Bund schließt mithin bündig zur Beschickungsöffnung ab, was insbesondere eine maschinelle Befüllung mit Reinigungspulver und ein anschließendes Aufschweißen einer als Deckel dienenden Folie vereinfacht.

Der Bund stellt in schon vorbeschriebener Weise eine Schweißfläche undloder einen Hinterschnitt bereit. Die geometrische Ausgestaltung des Bundes ist insoweit derart bemessen, dass ein Verschweißen mit einer als Deckel dienenden Folie undloder ein formschlüssiges Aufsetzen eines abnehmbaren Deckels in bestimmungsgemäßer Weise ermöglicht ist.

Die Seitenwandung des Grundkörpers verfügt gemäß einem weiteren Merkmal der Erfindung über außenumfangsseitig ausgebildete Griffmulden. Diese können verwenderseitig genutzt werden, um ein vereinfachtes Einsetzen des Vorratsbehälters in ein Dosiergerät zu ermöglichen. Auch die Entnahme eines Vorratsbehälters aus einem Dosiergerät wird so vereinfacht.

Die Seitenwandung verfügt gemäß einem weiteren Merkmal der Erfindung außenseitig über mit Stützflächen ausgerüstete Stützrippen. Diese Stützrippen stellen eine Art Aufstellgeometrie für Präsentationszwecke dar, was es ermöglicht, den Vorratsbehälter zwecks Verkaufsförderung auch aufrecht undloder in Hochstellung zur Vertikalen geneigt auszurichten.

Für das dosierte Einbringen von Reinigungsmittel in den Spülraum des Reinigungsgerätes verfügt das Dosiergerät über eine Dosiereinheit. Diese kann dosiergeräteseitig oder vorratsbehälterseitig ausgebildet sein. Gemäß der Erfindung wird deshalb vorgeschlagen, dass der Volumenraum eine Vorratskammer und eine in eine Dosieröffnung mündende Dosierkammer aufweist, wobei die Dosierkammer unter Zwischenordnung einer Durchlassöffnung an die Vorratskammer strömungstechnisch angeschlossen ist, wobei ein Verschlussmittel vorgesehen ist, mittels dem die Dosierauslassöffnung zumindest bis zu einer bestimmungsgemäßen Erstingebrauchnahme des Vorratsbehälters verschlossen ist.

Gemäß dieser bevorzugten Ausführungsform verfügt der Vorratsbehälter über eine Dosiereinheit, die unter anderem über eine Dosierkammer verfügt, die vom Vorratsbehälter bereitgestellt ist. Um die Reinigungsmitteldosierung bewerkstelligen zu können, verfügt der Vorratsbehälter über eine Vorratskammer einerseits und eine Dosierkammer andererseits. Dabei dient die Vorratskammer der Bevorratung des Reinigungsmittels und die Dosierkammer besorgt im Verwendungsfall die portionsweise Reinigungsmitteldosierung. Zu diesem Zweck ist die Dosierkammer in zwei strömungstechnisch miteinander verbundene Teilbereiche untergliedert, und zwar einen Dosierraum einerseits und einen Dosierkanal andererseits, die mittels einer Barriere voneinander separiert sind. Die Barriere begrenzt den Dosierraum derart, dass bei einer Verdrehbewegung des Vorratsbehälters zunächst eine Befüllung des Dosierraums mit einer durch die Größe des Dosierraums vorgegebene Menge an Reinigungsmittel erfolgt. Bei einer weiteren Verdrehbewegung wird die in den Dosierraum eindosierte Menge an Reinigungsmittel an der Barriere vorbei in den Dosierkanal in Richtung der Dosieröffnung geleitet, ohne dass weiteres Reinigungsmittel aus der Vorratskamer in den Dosierraum hinausströmt. Im bestimmungsgemäßen Verwendungsfall gelangt das Reinigungsmittel mithin aus der Vorratskammer durch die Durchlassöffnung hindurch in den Dosierraum der Dosierkammer, wobei die Größe des Dosierraums die Menge an portioniertem Reinigungsmittel bestimmt. Infolge einer weiteren Verdrehbewegung des Vorratsbehälters verlässt das portionierte Reinigungsmittel den Dosierraum und gelangt durch den Dosierkanal hindurch zur Dosieröffnung, wobei infolge der weitergeführten Verdrehbewegung des Vorratsbehälters kein Reinigungsmittel mehr aus der Vorratskammer durch die Durchlassöffnung hindurch in den Dosierraum der Dosierkammer nachströmen kann. Gemäß dieser Ausführungsform wird die Auslassöffnung vom Vorratsbehälter durch die Dosieröffnung gebildet, in die der Dosierkanal mündet.

Es hat sich herausgestellt, dass vom Vorratsbehälter bevorratetes Reinigungsmittel infolge eines ungewollten Feuchtigkeitseintrages verklumpen kann, und dies noch vor einer bestimmungsgemäßen Erstingebrauchnahme. Insbesondere eine Verklumpung von sich in der Dosierkammer befindlichem Reinigungsmittel ist von Nachteil, da dies zu einem Zusetzen des Dosierkanals undloder zu einem Blockieren des Dosierraums mit der Folge führen kann, dass ein ordnungsgemäßes Eindosieren von Reinigungsmittel in den Spülraum des Reinigungsgerätes nicht mehr möglich ist.

Mit der erfindungsgemäßen Weiterbildung wird insoweit Abhilfe geschaffen, denn es ist ein Verschlussmittel vorgesehen, das die Durchlassöffnung zwischen Vorratskammer und Dosierkammer verschließt, zumindest bis zu einer bestimmungsgemäßen Erstingebrauchnahme des Vorratsbehälters. Mittels des erfindungsgemäßen Verschlussmittels ist es also sichergestellt, dass die strömungstechnische Verbindung zwischen Vorratskammer und Dosierkammer unterbrochen ist. Von der Vorratskammer bevorratetes Reinigungsmittel kann mithin nicht in die Dosierkammer überströmen. Sollte es also zu einem ungewollten Feuchtigkeitseintrag kommen, kann es allenfalls zu einer Verklumpung von Reinigungsmittel in der Vorratskammer, nicht aber in der Dosierkammer kommen, und zwar deshalb nicht, weil dank des vorgesehenen Verschlussmittels ein Übergang von Reinigungsmittel aus der Vorratskammer in die Dosierkammer unterbunden ist. Eine etwaige Verklumpung von Reinigungsmittel in der Vorratskammer wiegt indes nicht so schwer wie eine nach dem Stand der Technik mögliche Verklumpung in der Dosierkammer, denn einerseits kommt es bei einer bestimmungsgemäßen Verdrehbewegung des Vorratsbehälters ob der Größe der Vorratskammer zu einem Aufbrechen etwaiger sich dort befindlicher Verklumpungen und andererseits stellt die Dosierkammer aufgrund ihrer Unterteilung in Dosierkanal und Dosierraum eine Art Labyrinthführung dar, die eher zu ungewollten Reinigungsmittelanhaftungen als die Vorratskammer neigt.

Die Unterbrechung der strömungstechnischen Verbindung zwischen Vorratskammer und Dosierkammer vor einer Erstingebrauchnahme stellt zudem sicher, dass eine bestimmungsgemäße Portionierung des Reinigungsmittels im Erstinbetriebnahmefall stattfinden kann. Das erfindungsgemäße Verschlussmittel dient insofern auch als Lagerungs- und Transportsicherung, denn es ist wirkungsvoll unterbunden, dass Reinigungsmittel vor einer Erstingebrauchnahme in die Dosierkammer einwandern kann.

Das Verschlussmittel kann gemäß einer ersten Alternative der Erfindung ein bewegbar am Vorratsbehälter angeordnetes Verschlusselement aufweisen, das aus einer die Durchlassöffnung verschließenden Verschlussstellung in eine die Durchlassöffnung freigebenden Offenstellung und umgekehrt überführbar ist. Gemäß dieser Ausführungsform ist es gestattet, verwenderseitig die Durchlassöffnung wahlweise zu öffnen oder zu schließen. Dies gestattet es in vorteilhafter Weise, die Durchlassöffnung wiederholt zu öffnen und/oder zu schließen, womit es ermöglicht ist, den Vorratsbehälter vor einer Komplettentleerung der Dosiereinheit zu entnehmen und hinsichtlich der Durchlassöffnung zu verschließen, so dass zu einem späteren Zeitpunkt eine Wiederverwendung undloder Weiterverwendung des Vorratsbehälters gestattet ist. Diese bevorzugte Ausführungsform der Erfindung stellt mithin eine wiederverschließbare Durchlassöffnung bereit.

Das Verschlusselement kann ein korrespondierend zur Durchlassöffnung ausgebildeter Wandabschnitt sein, der an einem verdrehbar gelagerten Drehteller angeordnet ist. Das Verschlusselement ist mithin verdrehbar ausgebildet, wobei verwenderseitig durch Einleitung einer einfachen Verdrehbewegung das Verschlusselement aus einer Offenstellung in eine Verschlussstellung verbracht werden kann und umgekehrt. Die Stellung des Verschlusselementes wird einem Verwender bevorzugterweise durch entsprechende Markierungen am Vorratsbehälter undloder am Verschlusselement visuell angezeigt, so dass von außen erkennbar ist, ob die Durchlassöffnung zwischen Vorratskammer und Dosierkammer strömungstechnisch geöffnet oder verschlossen ist.

Gemäß einer alternativen Ausgestaltung der Erfindung ist das Verschlussmittel eine Siegelfolie. Diese verschließt vor einer Erstingebrauchnahme die Durchlassöffnung. Diese ist vor einer Erstingebrauchnahme des Vorratsbehälters zu entfernen, um so die Durchlassöffnung freizugeben, d.h. die strömungstechnische Verbindung zwischen Vorratskammer und Dosierkammer barrierefrei auszugestalten.

Zu diesem Zweck kann gemäß einem weiteren Merkmal der Erfindung vorgesehen sein, dass die Siegelfolie einendseitig einer anderendseitig durch die Dosieröffnung hindurchgeführte Lasche angeordnet ist. Verwenderseitig kann die Lasche ergriffen und alsdann daran gezogen werden, was zu einem Aufreißen undloder Abtrennen der endseitig an der Lasche angeordneten Siegelfolie führt. Hierdurch wird die Durchlassöffnung geöffnet.

Gemäß einer weiteren Ausführungsform der Erfindung kann vorgesehen sein, dass die Dosierkammer von einem Gehäuse bereitgestellt ist. Dabei ist dieses Gehäuse als zum Vorratsbehälter separates Bauteil ausgebildet. Es verfügt über einen Gehäusekörper, der auswechselbar vom Grundkörper des Vorratsbehälters aufgenommen ist. Im Bedarfsfall kann das die Dosierkammer bereitstellende Gehäuse verwenderseitig dem Vorratsbehälter entnommen werden. Diese Ausgestaltung ist insbesondere bei mehrfach verwendbar ausgebildeten Vorratsbehältern von Vorteil, weil es verwenderseitig so gestattet ist, die Dosierkammer reinigen zu können, beispielsweise mittels einer Flaschenbürste, die dosieröffnungsseitig in das die Dosierkammer bereitstellende Gehäuse einzuführen ist.

Das Gehäuse verfügt gemäß einem weiteren Merkmal der Erfindung über einen Gehäusedeckel, der abnehmbar am Gehäusekörper angeordnet ist. Bei abgenommenem Gehäusedeckel ist ein direkter Zugriff von oben auf die Dosierkammer, mithin sowohl auf den Dosierraum als auch auf den Dosierkanal möglich, was eine verwenderseitige Reinigung vereinfacht. So ist es im Reinigungsfall gestattet, in einem ersten Schritt das die Dosierkammer bereitstellende Gehäuse vom Vorratsbehälter zu trennen, um dann in einem zweiten Schritt das Gehäuse zu zerlegen, indem der Gehäusedeckel vom Gehäusekörper genommen wird, was dann einen ungehinderten Zugriff auf die Dosierkammer ermöglicht. Etwaige sich in der Dosierkammer verfangenen Reinigungsmittelreste, Verklumpungen undloder Verkrustungen können rückstandslos entfernt werden, womit eine Wiederverwendung möglich ist, was auch unter Umweltgesichtspunkten von Vorteil ist.

Der Gehäusekörper und der Gehäusedeckel sind bevorzugterweise miteinander verrastbar ausgebildet. Dies ermöglicht einerseits eine einfache Handhabung bei der Entfernung des Gehäusedeckels, stellt andererseits aber auch sicher, dass sich der Gehäusedeckel nicht ungewollt vom Gehäusekörper löst, insbesondere dann nicht, wenn das Gehäuse im Austauschfall vom Vorratsbehälter getrennt wird.

Weitere Merkmale und Vorteile der Erfindung ergeben sich aus der nachfolgenden Beschreibung anhand der Figuren. Dabei zeigen
- Fig. 1: in schematischer Explosionsdarstellung einen Vorratsbehälter gemäß einer ersten Ausführungsform;
- Fig. 2: in schematisch perspektivischer Ansicht den Vorratsbehälter nach Fig. 1;
- Fig. 3: in schematischer Seitenansicht den Vorratsbehälter nach Fig. 1 in geöffneter Stellung;
- Fig. 4: in schematischer Seitenansicht den Vorratsbehälter nach Fig. 1 in geschlossener Stellung;
- Fig. 5: in schematischer Draufsicht von oben den Vorratsbehälter nach Fig. 1;
- Fig. 6: in schematischer Explosionsdarstellung einen Vorratsbehälter gemäß einer zweiten Ausführungsform;
- Fig. 7: in schematischer Schnittdarstellung von oben den Vorratsbehälter nach Fig. 6 in geöffneter Stellung;
- Fig. 8: in schematischer Schnittdarstellung von oben den Vorratsbehälter nach Fig. 6 in geschlossener Stellung;
- Fig. 9: in schematischer Draufsicht von unten den Vorratsbehälter nach Fig. 6 in geöffneter Stellung;
- Fig. 10: in schematischer Draufsicht von unten den Vorratsbehälter nach Fig. 6 in geschlossener Stellung;
- Fig. 11: in schematischer Explosionsdarstellung einen Vorratsbehälter gemäß einer dritten Ausführungsform;
- Fig. 12: in schematischer Draufsicht von oben den Vorratsbehälter nach Fig. 11;
- Fig. 13: in schematischer Explosionsdarstellung einen Vorratsbehälter gemäß einer vierten Ausführungsform;
- Fig. 14: in schematischer Draufsicht von oben den Vorratsbehälter nach Fig. 13;
- Fig. 15: in schematisch perspektivischer Ansicht den Vorratsbehälter nach Fig. 13;
- Fig. 16: in schematisch perspektivischer Ansicht den Vorratsbehälter nach Fig. 1 in Präsentationsstellung;
- Fig. 17: in schematischer Seitenansicht den Vorratsbehälter nach Fig. 1 in Präsentationsstellung;
- Fig. 18: in schematisch perspektivischer Ansicht den Vorratsbehälter nach Fig. 6 in Präsentationsstellung;
- Fig. 19: in anderer schematisch perspektivischer Ansicht den Vorratsbehälter nach Fig. 6 in Präsentationsstellung;
- Fig. 20: in schematischer Ansicht die Innenseite einer Spülraumtür einer Geschirrspülmaschine und
- Fig. 21: in schematischer Seitenansicht ein Reinigungsgerät in Form einer Geschirrspülmaschine.

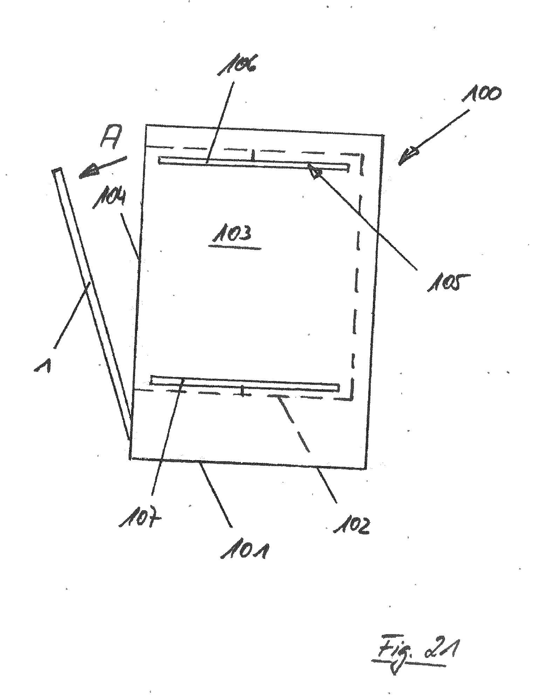

- Fig. 21: lässt in rein schematischer Darstellung ein Reinigungsgerät in der Ausgestaltung einer Geschirrspülmaschine 100 erkennen.

Die Geschirrspülmaschine 100 verfügt in an sich bekannter Weise über ein Gehäuse 101, das einen Spülbehälter 102 aufnimmt. Der Spülbehälter 102 stellt seinerseits einen Behandlungsraum - auch Spülraum 103 genannt - zur Aufnahme von zu reinigendem Spülgut bereit. Zur Beschickung des Spülraums 103 mit zu reinigendem Spülgut verfügt der Spülbehälter 102 über eine Beschickungsöffnung 104. Diese ist mittels einer Spülraumtür 1 fluiddicht verschließbar, wobei die Spülraumtür 1 um eine horizontal verlaufende Schwenkachse drehverschwenkbar gelagert ist.

Im bestimmungsgemäßen Verwendungsfall erfolgt eine Beaufschlagung des zu reinigenden Spülgutes mit Spülflotte, zu welchem Zweck die Geschirrspülmaschine 100 über eine Sprüheinrichtung 105 verfügt. Im gezeigten Ausführungsbeispiel gehören zur Sprüheinrichtung 105 ein oberer Sprüharm 106 sowie ein unterer Sprüharm 107.

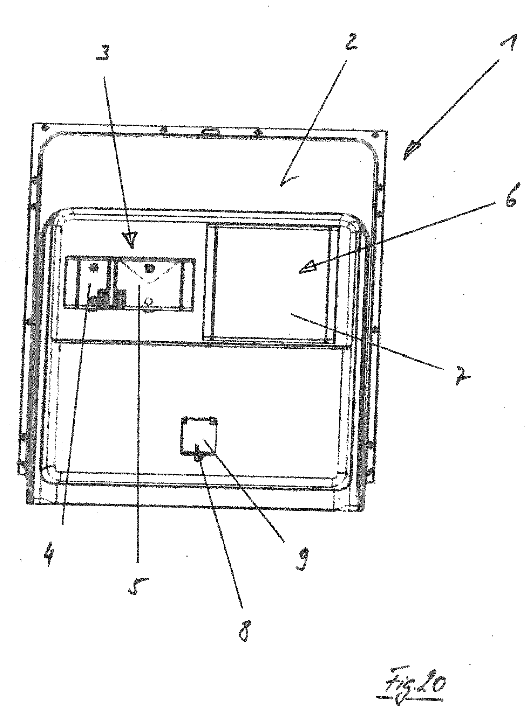

Fig. 20 lässt die Spülraumtür 1 in einer Draufsicht erkennen, und zwar die Innenansicht gemäß Blickrichtung A nach Fig. 21.

Wie Fig. 20 zu entnehmen ist, verfügt die Spülraumtür 1 innenseitig über ein aus dem Stand der Technik an sich bekanntes Kombinationsgerät 3, das einerseits über eine Klarspülmittelbevorratung 4 sowie andererseits über einen Vorratsbehälter 5 verfügt, der je Spülprogramm verwenderseitig manuell mit Reinigungsmittel aufzufüllen ist.

Die Geschirspülmaschine 100 verfügt neben dem aus dem Stand der Technik an sich bekannten Kombinationsgerät 3 ferner über ein Dosiergerät 6, das ebenso wie das Kombinationsgerät 3 auf der Innenseite 2 der Spülraumtür 1 angeordnet ist. Bei geschlossener Spülraumtür 1 befindet sich die Verschlussklappe 7 des Dosiergerätes 6 in Verschlussstellung, wie dies in Fig. 20 gezeigt ist.

Wie dies im Weiteren noch näher beschrieben werden wird, verfügt das in den Figuren nicht näher dargestellte Dosiergerät 6 über einen Vorratsbehälter 10, der schüttfähiges Reinigungsmittel in Pulverform beherbergt. Im bestimmungsgemäßen Verwendungsfall gelangt Reinigungsmittel aus dem Vorratsbehälter 10 in den Spülraum 103 der Geschirrspülmaschine 100, zu welchem Zweck auf der Innenseite 2 der Spülraumtür 1 ein Reinigungsmittelauslass 8 vorgesehen ist. Dieser Reinigungsmittelauslass 8 ist mit einer Abdeckung oder einem verschwenkbar angeordneten Deckel 9 ausgerüstet.

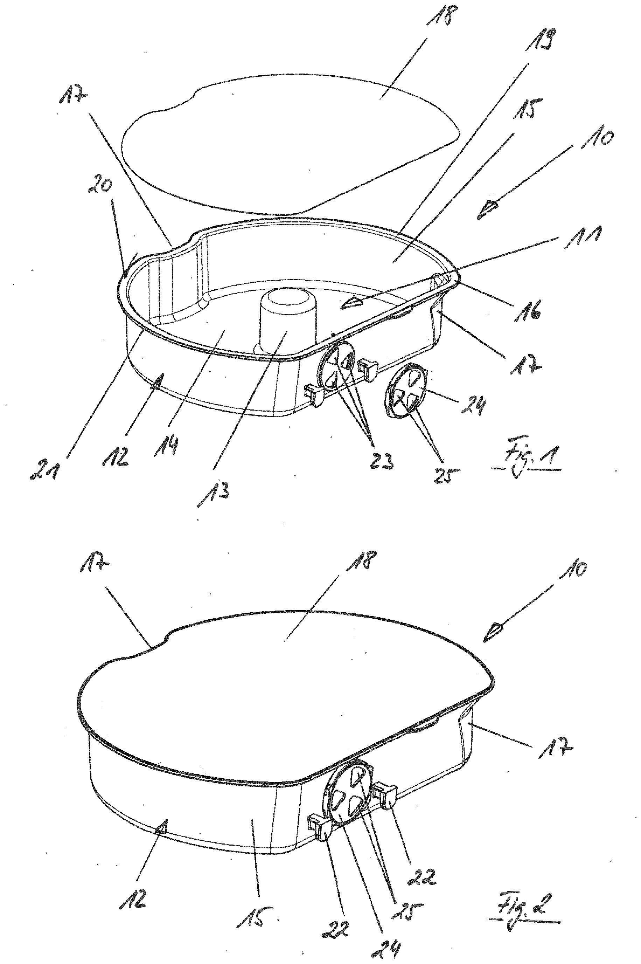

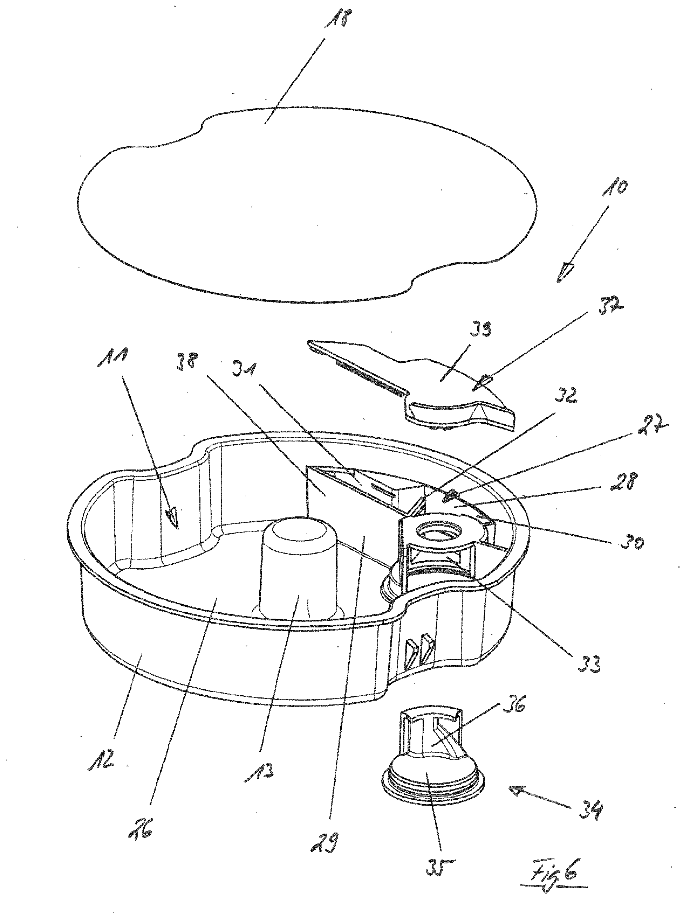

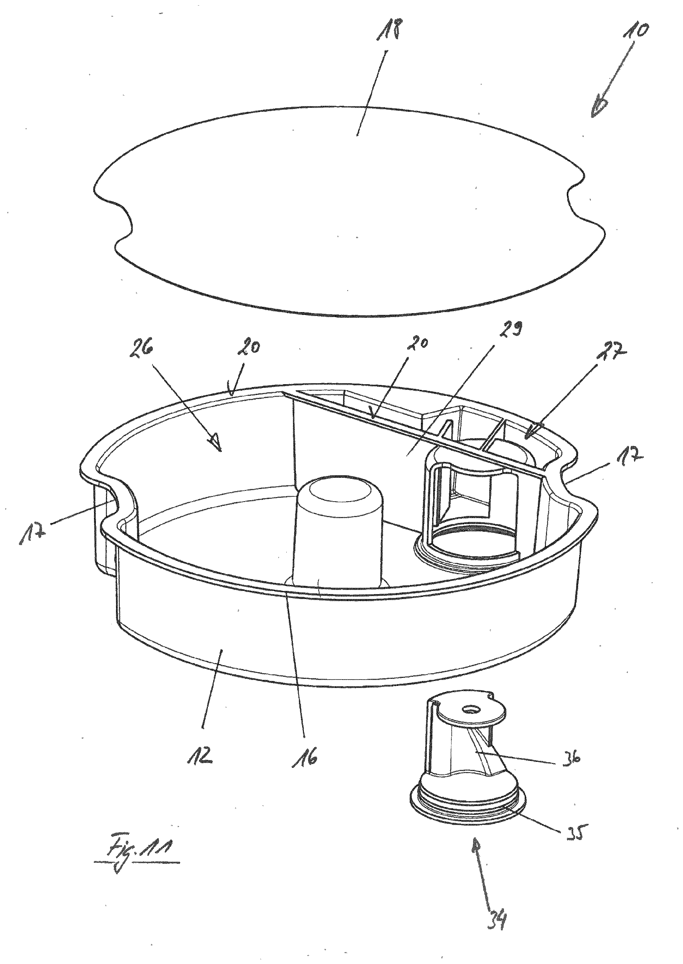

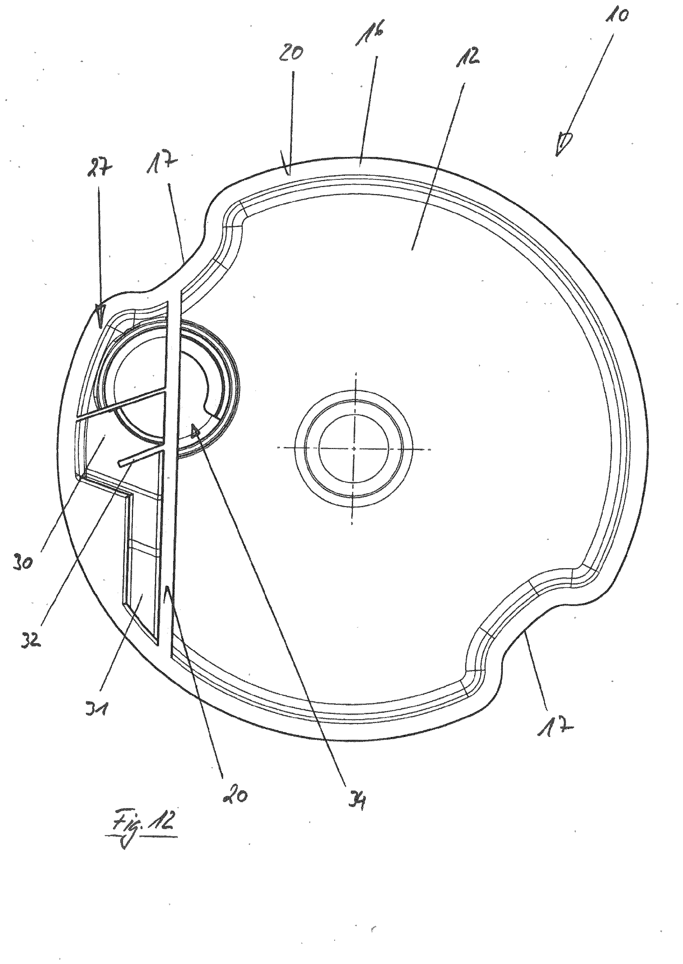

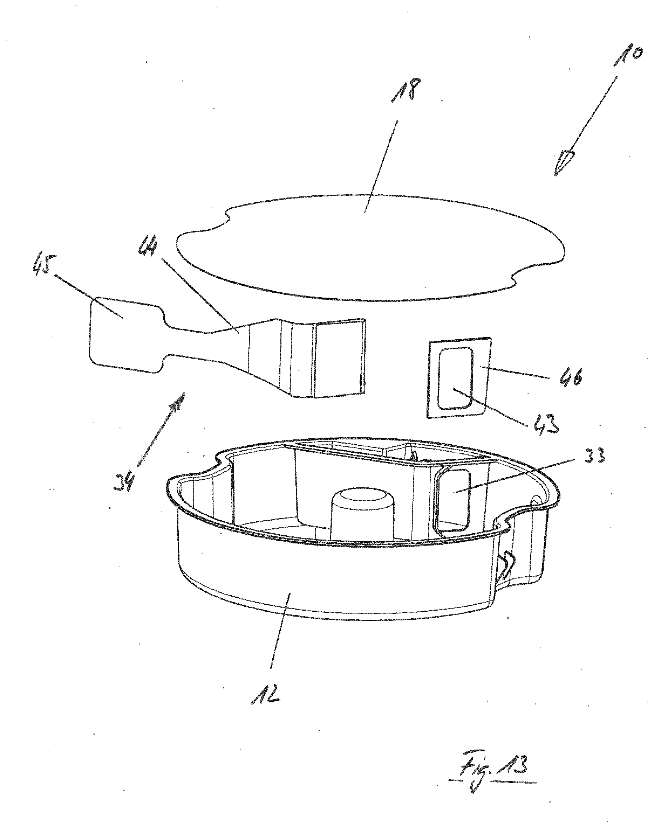

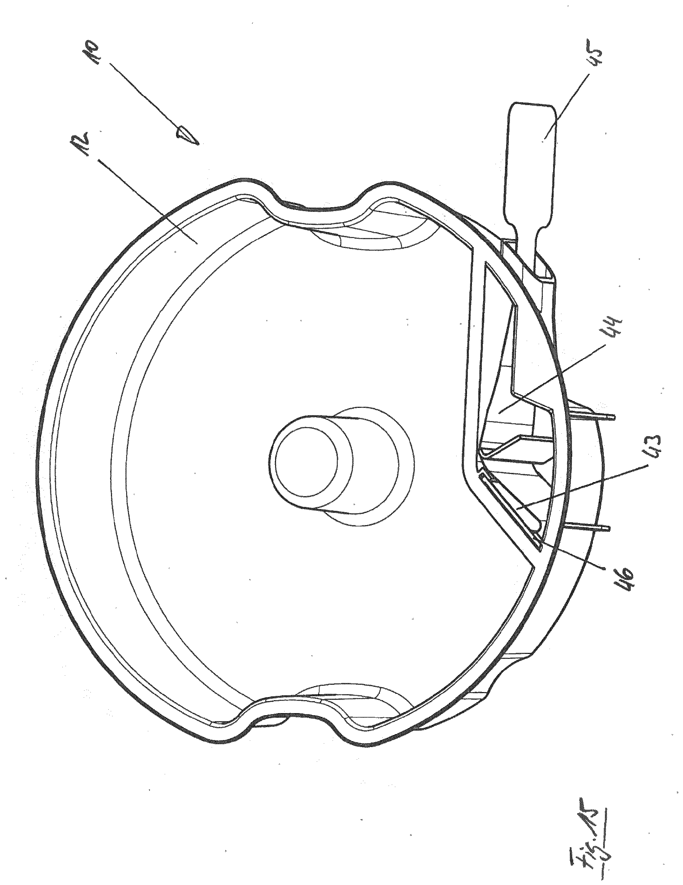

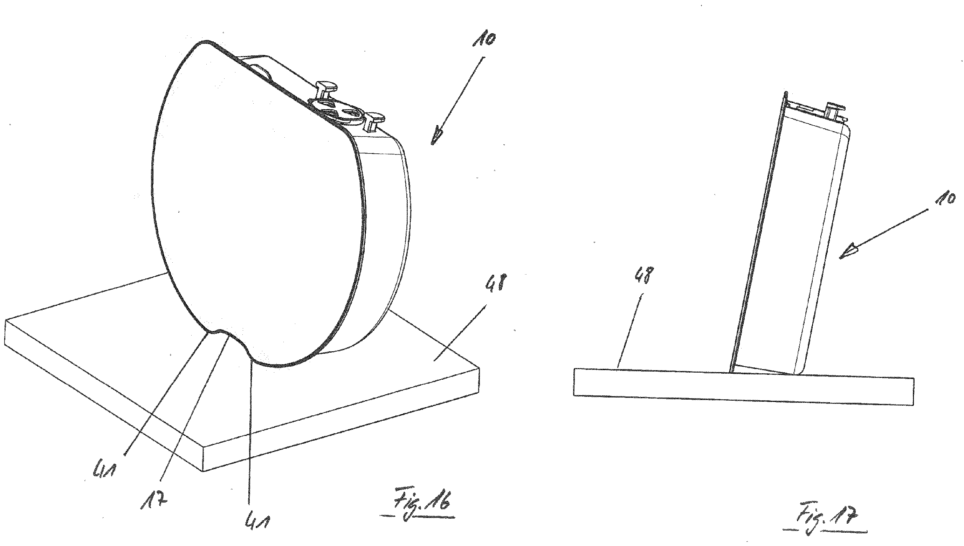

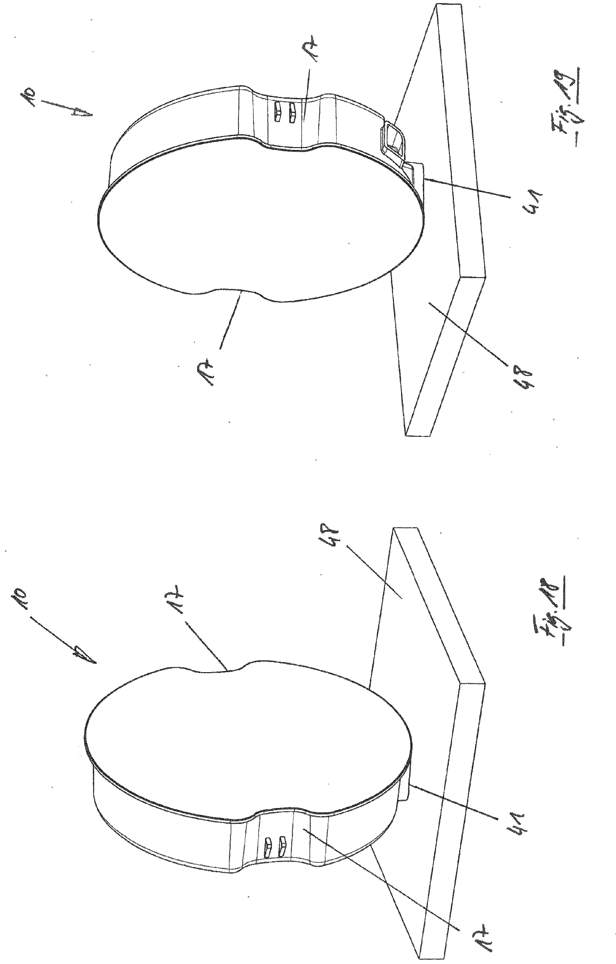

Die Figuren 1 bis 19 lassen den Vorratsbehälter 10 erkennen, wobei die Figuren 1 bis 5 eine nicht unter das Patent fallende erste Ausführungsform, die Figuren 6 bis 10 eine zweite Ausführungsform, die Figuren 11 und 12 eine dritte Ausführungsform sowie die Figuren 13 bis 15 eine vierte Ausführungsform betreffen. Die Figuren 16 und 17 zeigen den Vorratsbehälter 10 gemäß der ersten Ausführungsform in Präsentationsstellung. Die Figuren 18 und 19 zeigen den Vorratsbehälter 10 gemäß der zweiten Ausführungsform, ebenfalls in Präsentationsstellung.

Der erfindungsgemäße Vorratsbehälter 10 verfügt über einen Grundkörper 12, der einen Volumenraum 11 bereitstellt. Dabei weist der Volumenraum 11 eine Größe auf, die der Bevorratung von pulverförmigem Reinigungsmittel in einer Menge dient, die für die Durchführung einer Mehrzahl von Spülprogrammen ausreichend ist.

Der Grundkörper 12 verfügt über ein Bodenteil 14 sowie eine einstückig damit ausgebildete Seitenwandung 15. Vom Bodenteil 14 ist ein Dom 13 bereitgestellt, der dazu dient, bei einem in ein Dosiergerät 6 eingesetzten Vorratsbehälter 10 einen dosiergeräteseitigen Achsfortsatz aufzunehmen.

Erfindungsgemäß ist die Seitenwandung 15 dem Bodenteil 14 gegenüberliegend mit einem Bund 16 ausgerüstet, der sich ausgehend von der Seitenwandung 14 radial nach außen erstreckt. Dabei umschließt der Bund 16 die vom Grundkörper 12 bereitgestellte und mittels eines Deckels 18 verschließbare Beschickungsöffnung 19.

Die Beschickungsöffnung 19 dient einer Befüllung des Vorratsbehälters 10 mit Reinigungsmittel. Eine solche Befüllung wird herstellerseitig und/oder verwenderseitig vorgenommen, je nachdem, ob der Vorratsbehälter 10 als Einweg-Behälter oder als Mehrweg-Behälter genutzt wird. In jedem Fall ist ob der Größe der Beschickungsöffnung 19 eine einfache und leicht durchzuführende Befüllung des Vorratsbehälters 10 mit pulverförmigem Reinigungsmittel ermöglicht.

Der die Beschickungsöffnung 19 umschließende Bund 16 stellt einerseits oberseitig eine Schweißfläche 20 sowie andererseits aufgrund seiner radialen Erstreckung einen Hinterschnitt 21 bereit. Aufgrund dieser Ausgestaltung ist es möglich, den Deckel 18 entweder als mit dem Grundkörper 12 zu verschweißende Folie oder als wiederverwendbaren Deckel auszubilden, der im bestimmungsgemäßen Verwendungsfall unter Ausbildung eines Formschlusses den Hinterschnitt 21 umgreifend die Beschickungsöffnung 19 dicht verschließt. Im Falle einer mit dem Grundkörper 12 verschweißten Folie als Deckel 18 ist der Vorratsbehälter 10 als Einweg-Vorratsbehälter ausgebildet. Im Falle eines durch Formschluss gehaltenen Deckels kann dieser verwenderseitig wiederholt zum Verschließen des Vorratsbehälters 10 genutzt werden, so dass in diesem Fall ein Mehrweg-Vorratsbehälter gegeben ist.

Für eine vereinfachte verwenderseitige Handhabung des Vorratsbehälters 10 ist dieser mit Griffmulden 17 ausgerüstet.

Zwecks positionsgenauem Einsetzen des Vorratsbehälters 10 in ein Dosiergerät 6 verfügt der Vorratsbehälter 10 über Arretierfortsätze 22, die an der Seitenwandung 15 angeordnet sind. Im bestimmungsgemäßen Verwendungsfall greifen diese Arretierfortsätze 22 in entsprechende Arretierausnehmungen des Dosiergerätes 6, womit eine positionsgenaue Lagefixierung des Vorratsbehälters 10 relativ zur Aufnahme des Dosiergerätes 6 sichergestellt ist.

Der Vorratsbehälter 10 verfügt zwecks Abgabe von Reinigungsmittel über Auslassöffnungen 23. Im Dosierfall wird vom Volumenraum 11 des Vorratsbehälters 10 bevorratetes Reinigungsmittel über diese Auslassöffnungen 23 in Richtung Spülraum 103 abgegeben.

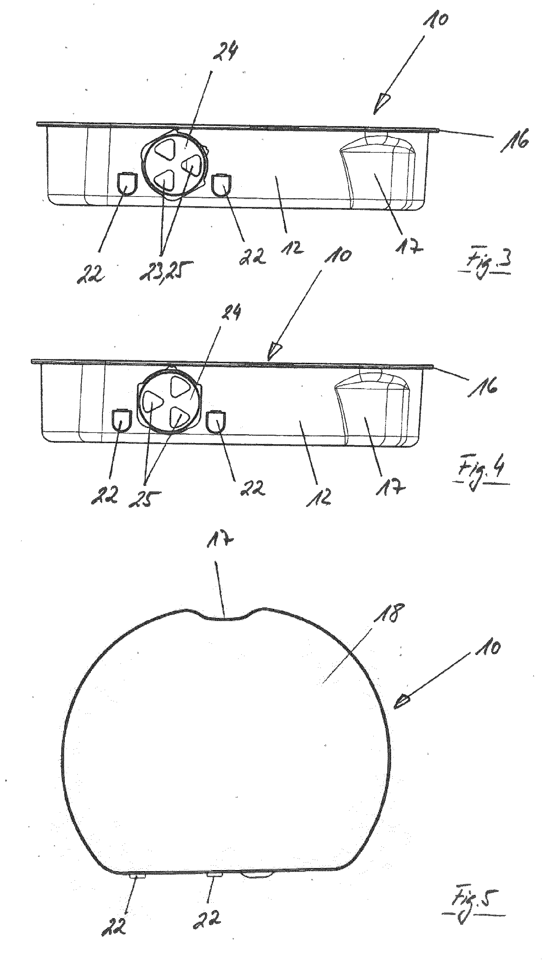

Gemäß dem gezeigten Ausführungsbeispiel sind die Auslassöffnungen 23 verschließbar. Es ist zu diesem Zweck eine Drehscheibe 24 vorgesehen, die zu den Auslassöffnungen 23 korrespondierend ausgebildete Durchbrüche 25 aufweist. In Offenstellung fluchten die Auslassöffnungen 23 und Durchbrüche 25, wie dies in Fig. 3 gezeigt ist. Befindet sich die Drehscheibe 24 indes in Verschlussstellung, sind die Auslassöffnungen 23 durch die Drehscheibe 24 blockiert, so dass eine Reinigungsmittelentnahme nicht gestattet ist. Das wahlweise Öffnen undloder Verschließen der Auslassöffnungen 23 ermöglicht es, einen noch nicht vollständig entleerten Vorratsbehälter 10 dem Dosiergerät 6 zu entnehmen, ohne dass hierbei die Gefahr besteht, dass ungewollt Reinigungsmittel aus dem Vorratsbehälter 10 abgegeben wird.

Für ein dosiertes Einbringen von Reinigungsmittel in den Spülraum 104 ist eine Dosiereinheit vorgesehen. Diese Dosiereinheit kann entweder dosiergeräteseitig oder vorratsbehälterseitig ausgebildet sein. Das Ausführungsbeispiel nach den Figuren 1 bis 5 zeigt eine Ausgestaltung, dergemäß der Vorratsbehälter 10 über keine Dosiereinheit verfügt, mithin eine solche Ausführungsform, die mit einem Dosiergerät zusammenwirkt, das seinerseits eine entsprechende Dosiereinheit zur Verfügung stellt. Insofern dient bei der Ausführungsform nach den Figuren 1 bis 5 der gesamte vom Grundkörper 12 bereitgestellte Volumenraum 11 als Vorratskammer 26 zur Bevorratung von Reinigungsmittel.

Die weiteren Figuren 6 bis 15 zeigen jeweils Ausführungsformen, wonach der Vorratsbehälter 10 eine integriert damit ausgebildete Dosiereinheit 27 zur Verfügung stellt. Diese Dosiereinheit 27 stellt eine Dosierkammer 28 bereit, so dass sich der vom Grundkörper 12 des Vorratsbehälters 10 bereitgestellte Volumenraum 11 in Vorratskammer 26 einerseits und Dosierkammer 28 unterteilt, wobei diese beiden Kammern mittels einer Trennwand 29 voneinander getrennt sind.

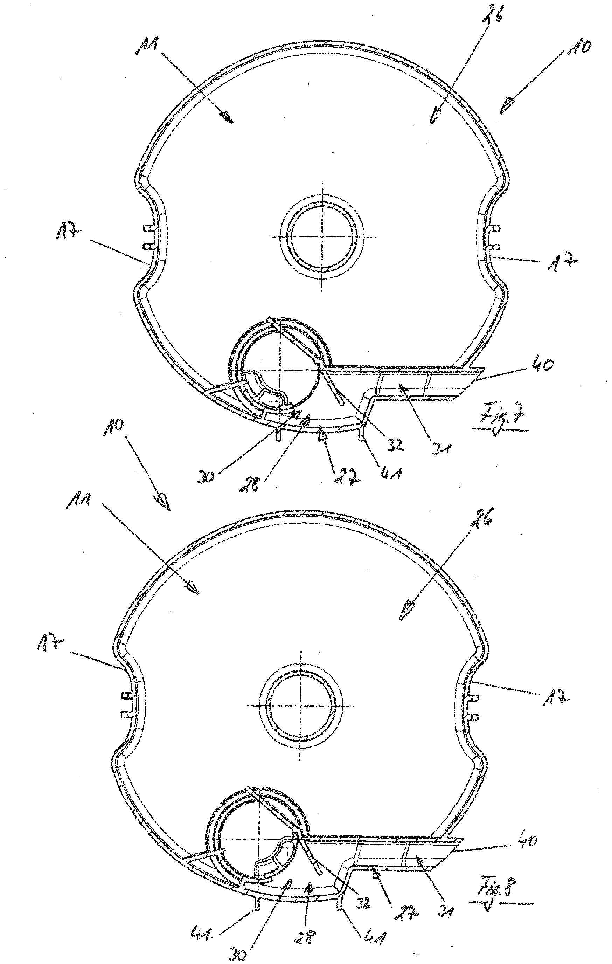

Die von einer Dosiereinheit 27 bereitgestellte Dosierkammer 28 ist zweigeteilt ausgebildet und verfügt über einen ersten Teilbereich 30, den sogenannten Dosierraum, sowie über einen zweiten Teilbereich 31, den sogenannten Dosierkanal. Wie dies insbesondere beispielsweise die Darstellungen nach den Figuren 7 und 8 erkennen lassen, mündet der Dosierkanal 31 in eine Dosieröffnung 40, die zugleich auch die Auslassöffnung 23 des Vorratsbehälters 10 darstellt.

Der Dosierraum 30 und der Dosierkanal 31 stehen in strömungstechnischer Verbindung, wobei die strömungstechnische Verbindung mittels einer Dosierbarriere 32 verengt ist, so dass eine insgesamt labyrinthförmig ausgebildete Dosierkammer 28 entsteht.

Die Vorratskammer 26 und die Dosierkammer 28 stehen über eine Durchlassöffnung 33 in strömungstechnischer Verbindung, über die im Betriebsfall Reinigungsmittel aus der Vorratskammer 26 in die Dosierkammer 28 überströmen kann. Es ist ein Verschlussmittel 34 vorgesehen, mittels dem die Durchlassöffnung 23 zumindest bis zu einer bestimmungsgemäßen Erstingebrauchnahme des Vorratsbehälters 10 verschlossen ist.

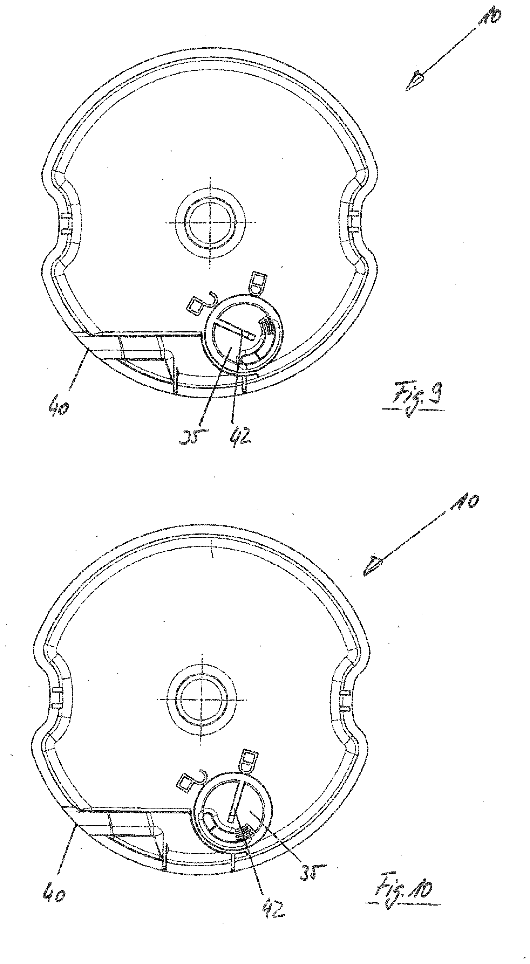

Figuren 6 bis 10 und 11 bis 15 zeigen jeweils eine Ausführungsform, wonach das Verschlussmittel 34 in einen in die Trennwand 29 integrierten Halter verdrehbar eingesetzt ist. Gemäß dieser Ausführungsform verfügt das Verschlussmittel 34 über einen Drehteller 35, der einen Wandabschnitt 36 trägt. Je nach Stellung des Verschlussmittels 34 ist die Durchlassöffnung 33 mittels des Wandabschnittes 36 entweder geöffnet oder versperrt. Um verwenderseitig eine Verdrehung des Verschlussmittels 34 bewerkstelligen zu können, trägt der Drehteller 35 unterseitig eine Handhabe 42, wie dies beispielsweise die Figuren 9 und 10 erkennen lassen. Dabei dient die Handhabe 42 zudem dazu, in Kombination mit einer Schlosssymbolik dem Verwender anzuzeigen, ob sich das Verschlussmittel 34 in geöffneter Stellung (Fig. 9) oder in geschlossener Stellung (Fig. 10) befindet.

Im bestimmungsgemäßen Verwendungsfall ist der Vorratsbehälter 10 in das Dosiergerät 6 eingesetzt, wobei sich das Verschlussmittel 34 in Offenstellung befindet. Eine Reinigungsmitteldosierung ergibt sich im Verwendungsfall dann wie folgt. Der Vorratsbehälter 10 wird mittels eines motorgestützten Antriebes des Dosiergerätes um die durch den vom Dom 13 aufgenommenen Achsfortsatz definierte Drehachse verdreht, und zwar um 360°. Infolge dieser Verdrehbewegung wird in der Vorratskammer 26 bevorratetes Reinigungsmittel durch die Durchlassöffnung 33 hindurch in die Dosierkammer 28 gefördert, wobei aufgrund der Dosierbarriere 32 nur eine Befüllung des Dosierraums 30, mithin nur eine Teilbefüllung der Dosierkammer 28 stattfindet. Die Dosierbarriere 32 gewährleistet jedenfalls, dass der Dosierkanal 31 zunächst reinigungsmittelfrei bleibt. Dabei bestimmt das von dem Dosierraum 30 bereitgestellte Volumen die Menge an portioniertem Reinigungsmittel.

Im Zuge einer weiteren Verdrehbewegung des Vorratsbehälters gelangt die Durchlassöffnung 33 in eine Stellung, dergemäß die Durchlassöffnung 33 oberhalb des Schüttspiegels des von der Vorratskammer 26 bevorrateten Reinigungsmittels liegt, so dass ein weiteres Nachströmen von Reinigungsmittel aus der Vorratskammer 26 in den Dosierraum 30 nicht weiter stattfindet. In dieser Verdrehstellung des Vorratsbehälters 10 kann das in den Dosierraum 30 zuvor eindosierte Reinigungsmittel an der Dosierbarriere 32 vorbei in den Dosierkanal 31 strömen. Von dort aus gelangt es dann über die Dosieröffnung 40 in den Spülraum 103.

Der Vorratsbehälter 10 ist hinsichtlich seiner geometrischen Ausgestaltung insbesondere von Durchlassöffnung 33 und Dosierbarriere 32 derart ausgebildet, dass bei einer Verdrehbewegung des Vorratsbehälters 10 zunächst eine Befüllung des Dosierraums 30 mit einer durch die Größe des Dosierraums 30 vorgegebenen Menge an Reinigungsmittel erfolgt und dass bei einer weiteren Verdrehbewegung die in den Dosierraum 30 eindosierte Menge an Reinigungsmittel an der Dosierbarriere 32 vorbei in den Dosierkanal 31 in Richtung der Dosieröffnung 40 abgegeben wird, ohne dass weiteres Reinigungsmittel aus der Vorratskammer 26 in den Dosierraum 30 nachströmt.

Bei einer Ausführungsform, wie sie in den Figuren 1 bis 5 dargestellt ist, geht ein Dosiervorgang in gleicher Weise von statten, wobei der konstruktive Unterschied darin besteht, dass die Dosiereinheit 27 nicht als integraler Bestandteil des Vorratsbehälters 10, sondern als Baukomponente des Dosiergerätes 6 ausgebildet ist.

Die Integration der Dosiereinheit 27 in den Vorratsbehälter 10 hat den Vorteil, dass bei einer Entsorgung des Vorratsbehälters 10 auch eine Entsorgung der Dosiereinheit 27 stattfindet. Damit wird das Risiko minimiert, dass es infolge eines ungewollten Feuchtigkeitseintrages zu einer Verklumpung von Reinigungsmittel insbesondere in der Dosiereinheit kommt. Von Nachteil dieser Ausgestaltung ist indes die vergleichsweise komplizierte Ausbildung des Vorratsbehälters, was die Herstellung verteuert. Insoweit ist die Ausführungsform nach den Figuren 1 bis 5 von Vorteil, da gemäß dieser Ausführungsform der Vorratsbehälter denkbar einfach aufgebaut ist.

Gemäß der Ausführungsform nach den Figuren 6 bis 10 ist eine Dosiereinheit 27 vorgesehen, die über ein Gehäuse 37 verfügt, das einen Gehäusekörper 38 und einen Gehäusedeckel 39 bereitstellt. Der Gehäusedeckel 39 ist abnehmbar auf dem Gehäusekörper 38 angeordnet, was es gestattet, den Gehäusedeckel 39 im Bedarfsfall zu entfernen, insbesondere um eine Reinigung des Gehäusekörpers 38 verwenderseitig durchführen zu können, Eine solche Ausgestaltung bietet sich insbesondere dann an, wenn der Vorratsbehälter 10 als Mehrweg-Vorratsbehälter ausgebildet ist. Im Falle der Wiederverwendung steigt nämlich die Gefahr, dass es zu ungewollten Reinigungsmittelverklumpungen in der Dosierkammer 28 kommt, welchem Risiko durch die Möglichkeit der verwenderseitigen Reinigung begegnet ist, aus welchem Grunde der Gehäusedeckel 39 abnehmbar ausgebildet ist.

Gemäß der Ausführungsform nach den Figuren 11 und 12 ist die die Vorratskammer 26 von der Dosierkammer 28 trennende Trennwand 29 in Höhenrichtung bis auf die Höhe des Bundes 16 ausgebildet und stellt oberseitig ebenso wie der Bund 16 eine Schweißfläche 20 bereit. Gemäß dieser Ausführungsform erfolgt ein Verschweißen des Deckels 18 mit dem Grundkörper 12, wobei der Deckel 18 nicht nur am Bund 16, sondern auch auf der Trennwand 29 aufliegt. Dies sorgt für eine sichere Verbindung von Grundkörper 12 und Deckel 18, und stellt zudem sicher, dass es nicht zu einem Durchhängen des als Folie ausgebildeten Deckels 18 kommt. Diese Ausgestaltung bietet sich insbesondere bei einem Einweg-Vorratsbehälter an, da eine verwenderseitige Reinigung der Dosierkammer 28 mangels abnehmbarem Gehäusedeckel nicht oder über die Dosieröffnung 40 nur bedingt möglich ist.

Die Figuren 13 bis 15 zeigen ein weiteres Ausführungsbeispiel, wobei im Unterschied zu den Ausführungsformen nach den Figuren 6 bis 12 ein in anderer Weise ausgebildetes Verschlussmittel 34 zum Einsatz kommt.

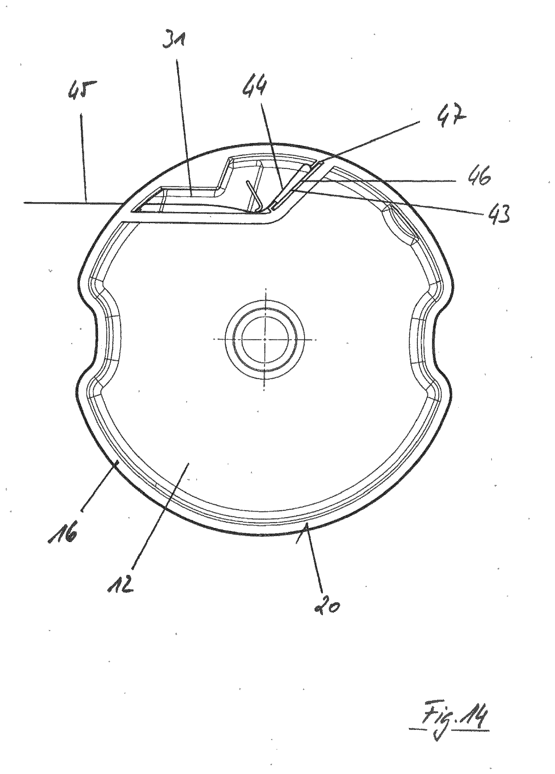

Das Verschlussmittel 34 gemäß der Ausführungsform nach den Figuren 13 bis 15 verfügt über eine Siegelfolie 43, die einendseitig an einer Lasche 44 angeordnet ist. Anderendseitig ist die Lasche 44 mit einer Handhabe 45 verbunden, die im Bedarfsfall verwenderseitig ergriffen werden kann. Wie sich insbesondere aus der Darstellung nach Fig. 14 ergibt, ist die Lasche 44 bei verschlossener Durchlassöffnung 33 durch den Dosierkanal 31 und die Dosieröffnung 40 hindurch nach außen geführt, so dass ein verwenderseitiger Zugriff auf die anderendseitig der Lasche 44 angeordnete Handhabe 45 gestattet ist.

Die Durchlassöffnung 33 verfügt dosierkammerseitig über eine Schlitzanordnung 47, in die ein Tragelement 46 eingesetzt ist. Dieses Tragelement 46 trägt die Siegelfolie 43, mit der die Durchlassöffnung vor einer Erstingebrauchnahme des Vorratsbehälters verschlossen ist.

Zwecks Öffnung der Durchlassöffnung 33 ist die Lasche 44 verwenderseitig an der Handhabe 45 zu ergreifen. Es ist alsdann an der Lasche 44 zu ziehen, so dass sich die Folie 43 von der Durchlassöffnung 33 zwecks Öffnung derselben löst.

Zum Zwecke der Verkaufsförderung kann der Vorratsbehälter 10 in eine Präsentationsstellung verbracht werden, wie sie in den Figuren 16 bis 19 gezeigt ist. In dieser Präsentationsstellung steht der Vorratsbehälter 10 aufrecht auf einem Untergrund 48, und zwar bevorzugterweise zur Vertikalen geneigt. Um den Vorratsbehälter 10 in dieser Präsentationsstellung lagezusichern ist gemäß dem Ausführungsbeispiel nach den Figuren 1 bis 5 eine entsprechend ausgebildete Griffmulde 17 vorgesehen, die entsprechende Stützflächen 41 bereitstellt. Bei der Ausführungsform nach den Figuren 18 bis 19 sind die Griffmulden 17 in anderer Form geometrisch ausgerichtet, weshalb zum Zwecke der Lagesicherung des Vorratsbehälters in Präsentationsstellung Stützrippen vorgesehen sind, die die Stützflächen 41 bereitstellen. Die Anordnung der Griffmulden 17, wie dies beispielsweise in den Figuren 18 und 19 gezeigt ist, hat sich indes als besonders ergonomisch herausgestellt, weshalb diese Ausführungsform bevorzugt ist.

Mit dem Vorratsbehälter 10 wird insgesamt eine konstruktive Ausgestaltung vorgeschlagen, die ob des an der Seitenwandung 15 des Grundkörpers 12 angeordneten Bundes 16 die Möglichkeit schafft, den Vorratsbehälter 10 entweder als Einweg-Vorratsbehälter mit einer aufgeschweißten Folie als Deckel oder als Mehrweg-Vorratsbehälter mit abnehmbarem Deckel auszurüsten. Dabei ist der Vorratsbehälter 10 je nach Ausführung entweder mit integrierter Dosiereinheit 27 oder ohne Dosiereinheit ausgebildet, je nach eingesetztem Dosiergerät 6, mit dem Vorratsbehälter 10 im bestimmungsgemäßen Verwendungsfall zusammenwirkt.

### Bezugszeichen

- 1: Spülraum
- 2: Innenseite
- 3: Kombinationsgerät
- 4: Klarspülmittelbevorratung
- 5: Vorratsbehälter
- 6: Dosiergerät
- 7: Verschlussklappe
- 8: Reinigungsmittelauslass
- 9: Deckel
- 10: Vorratsbehälter
- 11: Volumenraum
- 12: Grundkörper
- 13: Dom
- 14: Bodenteil
- 15: Seitenwandung
- 16: Bund
- 17: Griffmulde
- 18: Deckel
- 19: Beschickungsöffnung
- 20: Schweißfläche
- 21: Hinterschnitt
- 22: Arretierfortsatz
- 23: Auslassöffnung
- 24: Drehscheibe
- 25: Durchbruch
- 26: Vorratskammer
- 27: Dosiereinheit
- 28: Dosierkammer
- 29: Trennwand
- 30: erster Teilbereich (Dosierraum)
- 31: zweiter Teilbereich (Dosierkanal)
- 32: Dosierbarriere
- 33: Durchlassöffnung
- 34: Verschlussmittel
- 35: Drehteller
- 36: Wandabschnitt
- 37: Gehäuse
- 38: Gehäusekörper
- 39: Gehäusedeckel
- 40: Dosieröffnung
- 41: Stützfläche
- 42: Handhabe
- 43: Folie
- 44: Lasche
- 45: Handhabe
- 46: Tragelement
- 47: Schlitzanordnung
- 48: Untergrund

- 100: Geschirrspülmaschine
- 101: Gehäuse
- 102: Spülbehälter
- 103: Spülraum
- 104: Beschickungsöffnung
- 105: Sprüheinrichtung
- 106: Sprüharm
- 107: Sprüharm

## Patentansprüche

1. Vorratsbehälter zur Anordnung in einem Dosiergerät (6) eines programmgesteuerten Reinigungsgerätes (100), insbesondere einer Geschirrspülmaschine, mit einem einen Volumenraum (11) bereitstellenden Grundkörper (12), wobei der Volumenraum (11) eine Größe aufweist, die der Bevorratung von pulverförmigem Reinigungsmittel in einer Menge dient, die für die Durchführung einer Mehrzahl von Spülprogrammen ausreichend ist,
wobei der Volumenraum (11) eine Vorratskammer (26) und eine in eine Dosieröffnung (40) mündende Dosierkammer (28) aufweist, wobei die Dosierkammer (28) unter Zwischenordnung einer Durchlassöffnung (33) an die Vorratskammer (26) strömungstechnisch angeschlossen ist,
und wobei der Grundkörper (12) ein Bodenteil (14) und eine einstückig damit ausgebildete, umlaufende Seitenwandung (15) aufweist,
**dadurch gekennzeichnet, dass**
die Seitenwandung (15) dem Bodenteil (14) gegenüberliegend mit einem Bund (16) ausgerüstet ist, der sich ausgehend von der Seitenwandung (15) radial nach außen erstreckt,
und dass ein Verschlussmittel (34) vorgesehen ist, mittels dem die Durchlassöffnung (33) zumindest bis zu einer bestimmungsgemäßen Erstingebrauchnahme des Vorratsbehälters (10) verschlossen ist.

2. Vorratsbehälter nach Anspruch 1,
**dadurch gekennzeichnet, dass**
der Bund (16) eine vom Grundkörper (12) bereitgestellte und mittels eines Deckels (18) verschließbare Beschickungsöffnung (19) umschließt.

3. Vorratsbehälter nach Anspruch 1 oder 2,
**dadurch gekennzeichnet, dass**
der Bund (16) eine Schweißfläche (20) bereitstellt.

4. Vorratsbehälter nach einem der vorhergehenden Ansprüche,
**dadurch gekennzeichnet, dass**
der Bund (16) einen vorzugsweise umlaufenden Hinterschnitt (21) bereitstellt.

5. Vorratsbehälter nach einem der vorhergehenden Ansprüche,
**dadurch gekennzeichnet, dass**
die Seitenwandung (15) außenumfangsseitig eine Griffmulde (17) bereitstellt.

6. Vorratsbehälter nach einem der vorhergehenden Ansprüche,
**dadurch gekennzeichnet, dass**
die Seitenwandung (15) außenumfangsseitig Stützflächen (41) bereitstellt.

7. Vorratsbehälter nach einem der vorhergehenden Ansprüche,
**dadurch gekennzeichnet, dass**
das Verschlussmittel (34) ein bewegbar am Vorratsbehälter (10) angeordnetes Verschlusselement aufweist, das aus einer Verschlussstellung in eine Offenstellung und umgekehrt überführbar ist.

8. Vorratsbehälter nach einem der Ansprüche 1 bis 6,
**dadurch gekennzeichnet, dass**
das Verschlussmittel (34) eine Siegelfolie (43) ist.

9. Vorratsbehälter nach Anspruch 8,
**dadurch gekennzeichnet, dass**
die Siegelfolie (43) endseitig einer anderendseitig durch die Dosieröffnung (40) hindurchgeführten Lasche (44) angeordnet ist.

10. Vorratsbehälter nach einem der vorhergehenden Ansprüche,
**dadurch gekennzeichnet, dass**
die Dosierkammer (28) von einem Gehäuse (37) bereitgestellt ist.

11. Vorratsbehälter nach Anspruch 10,
**dadurch gekennzeichnet, dass**
das Gehäuse (37) einen Gehäusekörper (38) aufweist, der vom Grundkörper (12) des Vorratsbehälters (10) auswechselbar aufgenommen ist.

12. Vorratsbehälter nach Anspruch 10 oder 11,
**dadurch gekennzeichnet, dass**
das Gehäuse (37) einen Gehäusedeckel (39) aufweist, der abnehmbar am Gehäusekörper (38) angeordnet ist.

## Claims

1. Storage container for arrangement in a metering device (6) of a programme-controlled cleaning appliance (100), in particular a dishwasher, having a main body (12) providing a volumetric space (11), the volumetric space (11) having a size which can be used for storing powdered cleaning agent in a quantity which is sufficient for carrying out a plurality of cleaning programmes,
the volumetric space (11) having a storage chamber (26) and a metering chamber (28) which opens up into a metering opening (40), the metering chamber (28) being fluidically connected to the storage chamber (26) with the arrangement of a passage opening (33) therebetween,
and the main body (12) having a base part (14) and a circumferential side wall (15) formed integrally therewith,
**characterised in that**
the side wall (15) is equipped with a lip (16) opposite the base part (14), which lip extends radially outwards proceeding from the side wall (15),
and **in that** a closure means (34) is provided, by means of which the passage opening (33) is closed at least until the storage container (10) is used for the first time as intended.

2. Storage container according to claim 1,
**characterised in that**
the lip (16) encloses a loading opening (19) that is provided by the main body (12) and can be closed by means of a cover (18).

3. Storage container according to either claim 1 or claim 2,
**characterised in that**
the lip (16) provides a welding surface (20).

4. Storage container according to any of the preceding claims,
**characterised in that**
the lip (16) provides an undercut (21), preferably a circumferential undercut.

5. Storage container according to any of the preceding claims,
**characterised in that**
the side wall (15) provides a recessed handle (17) on the outer circumference.

6. Storage container according to any of the preceding claims,
**characterised in that**
the side wall (15) provides support surfaces (41) on the outer circumference.

7. Storage container according to any of the preceding claims,
**characterised in that**
the closure means (34) has a closure element that is movably arranged on the storage container (10) and can be transferred from a closed position into an open position, and vice versa.

8. Storage container according to any of claims 1 to 6,
**characterised in that**
the closure means (34) is a sealing film (43).

9. Storage container according to claim 8,
**characterised in that**
the sealing film (43) is arranged on the end of a tab (44) that is guided through the metering opening (40) at the other end.

10. Storage container according to any of the preceding claims,
**characterised in that**
the metering chamber (28) is provided by a housing (37).

11. Storage container according to claim 10,
**characterised in that**
the housing (37) has a housing body (38) which is replaceably accommodated by the main body (12) of the storage container (10).

12. Storage container according to either claim 10 or claim 11,
**characterised in that**
the housing (37) has a housing cover (39) which is removably arranged on the housing body (38).

## Revendications

1. Récipient de stockage destiné à être disposé dans un appareil de dosage (6) d'un appareil de nettoyage (100) commandé par programme, en particulier d'un lave-vaisselle, comportant un corps de base (12) fournissant un espace volumétrique (11), dans lequel l'espace volumétrique (11) présente une taille qui sert au stockage d'agent de nettoyage en poudre en une quantité suffisante pour la réalisation d'une pluralité de programmes de rinçage,
dans lequel l'espace volumétrique (11) présente une chambre de stockage (26) et une chambre de dosage (28) débouchant dans une ouverture de dosage (40), dans lequel la chambre de dosage (28) est raccordée par communication fluidique à la chambre de stockage (26) avec interposition d'une ouverture de passage (33),
et dans lequel le corps de base (12) présente une partie de fond (14) et une paroi latérale (15) périphérique réalisée d'un seul tenant avec celle-ci,
**caractérisé en ce que**
la paroi latérale (15) est équipée d'une collerette (16) à l'opposé de la partie de fond (14), laquelle collerette s'étend radialement vers l'extérieur à partir de la paroi latérale (15),
**et en ce qu'**un moyen de fermeture (34) est prévu, au moyen duquel l'ouverture de passage (33) est fermée au moins jusqu'à ce que le récipient de stockage (10) soit utilisé pour la première fois comme prévu.

2. Récipient de stockage selon la revendication 1,
**caractérisé en ce que**
la collerette (16) entoure une ouverture de chargement (19) fournie par le corps de base (12) et pouvant être fermée au moyen d'un couvercle (18).

3. Récipient de stockage selon la revendication 1 ou 2,
**caractérisé en ce que**
la collerette (16) fournit une surface de soudage (20).

4. Récipient de stockage selon l'une des revendications précédentes,
**caractérisé en ce que**
la collerette (16) fournit une contre-dépouille (21) de préférence périphérique.

5. Récipient de stockage selon l'une des revendications précédentes,
**caractérisé en ce que**
la paroi latérale (15) fournit une cavité de préhension (17) côté périphérie extérieure.

6. Récipient de stockage selon l'une des revendications précédentes,
**caractérisé en ce que**
la paroi latérale (15) fournit des surfaces d'appui (41) côté périphérie extérieure.

7. Récipient de stockage selon l'une des revendications précédentes,
**caractérisé en ce que**
le moyen de fermeture (34) présente un élément de fermeture disposé de manière à pouvoir être déplacé sur le récipient de stockage (10), lequel élément de fermeture peut être transféré d'une position de fermeture à une position d'ouverture et inversement.

8. Récipient de stockage selon l'une des revendications 1 à 6,
**caractérisé en ce que**
le moyen de fermeture (34) est un film de scellement (43).

9. Récipient de stockage selon la revendication 8,
**caractérisé en ce que**
le film de scellement (43) est disposé du côté de l'extrémité d'une languette (44) passant à travers l'ouverture de dosage (40) du côté de l'autre extrém ité.

10. Récipient de stockage selon l'une des revendications précédentes,
**caractérisé en ce que**
la chambre de dosage (28) est fournie par un boîtier (37).

11. Récipient de stockage selon la revendication 10,
**caractérisé en ce que**
le boîtier (37) présente un corps de boîtier (38) qui est reçu de manière interchangeable par le corps de base (12) du récipient de stockage (10).

12. Récipient de stockage selon la revendication 10 ou 11,
**caractérisé en ce que**
le boîtier (37) présente un couvercle de boîtier (39) qui est disposé de manière amovible sur le corps de boîtier (38).
